# EUROPEAN PATENT APPLICATION

(11) **EP 1 571 597 A2**
(43) Date of publication of application: **07.09.2005**
(21) Application number: 04028361.6
(22) Date of filing: 30.11.2004
(51) Int. Cl.: G06T 17/20, G06T 17/40

(54) **Analysis model producing apparatus**

(30) Priority: 02.03.2004 JP 2004057573
(71) Applicant: Hitachi, Ltd., Tokyo 100-8280 (JP)
(72) Inventor: Onodera, Makoto c/o Hitachi, Ltd. Intell. Prop. Gr, Tokyo (JP); Hariya, Masayuki c/o Hitachi, Ltd. Intel. Prop. Gr, Tokyo (JP); Hiro, Yoshimitsu c/o Hitachi Ltd. Intell. Prop. Gr, Tokyo (JP)
(74) Representative: Beetz & Partner

(57) **Abstract**

The invention relates to an analysis model producing apparatus that uses CAD data (102) and part-unit analyzing mesh data (104) therein. The CAD data (102) has parts CAD data (113) for each of parts (601-603) of an assembly and disposed position data (114) for each part (601-603), and in addition thereto, a modeling kind on a connect-portion between the parts (601-603) and connect-portion modeling data (109) for presenting a modeling method. Mesh data (107) for the assembly is obtained upon basis of the part-unit analyzing mesh data (104) and the disposed position data (114). And, an analysis model data (111) for the assembly is obtained through modeling the connect-portion between the parts (601-603), by applying the connect-portion modeling data (109) within the CAD data (102) thereupon.

## Description

The present application claims priority from Japanese application JP2004-57573 filed on March 2, 2004, the content of which is hereby incorporated by reference into this application.

### BACKGROUND OF THE INVENTION

The present invention relates to a CAE (Computer Aided Engineering) system for making a simulation upon physical phenomena, numerically, through numerical analysis with applying a computer therein, and in particular, it relates to an analysis model producing apparatus for producing an analysis model of an assembly model.

Within the numerical analysis, such as, a finite-element method, representatively, for example, there is applied a method, generally, for modeling an object or a substance to be analyzed, by using an aggregation of elements (i.e., an analyzing mesh) of a hexahedron and/or a tetrahedron. For example, within designing of a car, it is common to make the numerical analysis, through producing such the analyzing mesh, by a unit of a part or a sub-assembly, such as, an engine, a suspension, a body, a bumper, etc., for example. In a certain stage of the designing, a collision analysis or the like is also conducted, while producing such the analyzing mesh for the entire of the car, combining with the engine, the suspension, the body, etc. , so as to produce an analysis model of modeling the connecting portion between those parts.

Also, a conventional art for producing such the analysis model of an assembly model is described in Japanese Patent Laying-Open No. 2001-265836 (2001), for example. In this method, a neutral plane or surface (i.e., an analyzing shell model) is produced from CAD data (i.e., an assembly model) as a target of analysis, and then the analysis model is produced, by taking such the connecting portion between the parts into the consideration thereof.

The method for producing the analysis model for the assembly model, according to the conventional art, including the Japanese Patent Laying-Open No. 2001-265836 (2001), has the following problems: First, it is always necessary to re-produce the analyzing mesh for the assembly model, again, even when that analyzing mesh was already produced for each of parts or assembly. Since the analyzing mesh by a unit of the part has no such information, indicating a position where it should be disposed within the assembly model, it is necessary re-produce the analyzing mesh, again, at the time when analyzing the assembly model, irrespective of existence of the analyzing mesh of a unit of part, which was utilized in the numerical analysis by a unit of part; i.e., bringing about works or labors duplicated. Also, the analyzing mesh of a unit of part is the data having an actual result, such as, in an aspect of an accuracy of analyzing; however, this cannot be taken into the consideration when analyzing the assembly model.

Second, since the data about the connecting portions are registered and/or produced for the analysis model, therefore it is necessary to look up the connecting portions, again, when changing the disposed position and/or sizes of the part, etc.; thereby bringing about works or labors duplicated. Also, since being limited only to the analysis shell model, therefore it is not applicable onto a solid model, which is most commonly used.

### BRIEF SUMMARY OF THE INVENTION

The present invention, being accomplished by taking such the problems of the conventional art as was mentioned above into the consideration, and an object thereof is to provide an analysis model producing apparatus, in which modeling information of the connecting portion between parts can follow the design changes which are made through a CAD system, such as, changes of disposed position or sizes of the part, etc., for example, by re-using the existing analyzing mesh by a unit of part as an analyzing mesh for the assembling model.

According to the present invention, for accomplishing the object mentioned above, there is provided an analysis model producing apparatus, for producing assembly analyzing model data about an assembly having plural numbers of parts thereof. The apparatus may comprise: a CAD database, which stores CAD data for each of the plural numbers of parts, wherein said CAD database may comprise connect-portion modeling data of modeling and normalizing a connecting condition between those parts.

And, according to the present invention, in the analysis model producing apparatus as described in the above, preferably, said connect-portion modeling data may comprise data indicative of a modeling kind and a modeling method, as well as, a target part of connection. Further preferably, said modeling kinds may include a simple contact and a complete fixing, and said modeling method may include production of a contact boundary element and a definition of bonding connection.

Also, according to the present invention, in the analysis model producing apparatus as described in the above, it is desired that, said CAD database may comprise disposition position data for each of the parts. Further a means for producing assembly mesh data upon basis of said disposition position data may be provided. Also preferably, said assembly mesh data producing means may make alignment upon the analyzing mesh data for each of the parts, upon basis of the analyzing mesh data and the disposed position data, which are produced for each of the parts, thereby producing the assembly mesh data. And further, it is desirable that the analysis model producing apparatus as described in the above, further may comprise a connect-portion modeling means for determining a connect-portion model fitting to an actual connect-portion, which said assembly mesh data has, by using said connect-portion modeling data.

Also, according to the present invention, also for accomplishing the object mentioned above, there may be provided an analysis model producing apparatus, for producing an analysis model with using CAD data, which is produced in a CAD, and analyzing mesh data, which is produced upon basis of that CAD data. Said CAD data may comprise parts CAD data for each of parts of an assembly and disposed position data, as information for position alignment for each of the parts, and/or mesh data for the assembly may be obtained through position alignment of said analyzing mesh data, upon basis of said analyzing mesh data for a unit of each part of the assembly and said disposed position data stored in said CAD data.

Also, according to the present invention, also for accomplishing the object mentioned above, there may be provided an analysis model producing apparatus, for producing an analysis model with using CAD data, which is produced in a CAD, and analyzing mesh data, which is produced upon basis of that CAD data. The apparatus may comprise: means for storing said CAD data comprising parts CAD data for each of parts of an assembly and disposed position data, as information for position aligning for each of the parts; and/or means for producing mesh data for the assembly through position alignment of said analyzing mesh data, upon basis of said analyzing mesh data for a unit of each part of the assembly and said disposed position data stored in said CAD data.

Further, according to the present invention, for accomplishing the object mentioned above, there may also be provided an analysis model producing apparatus, for producing an analysis model with using CAD data, which is produced in a CAD, and analysis mesh data, which is produced upon basis of that CAD data. Said CAD data may comprise parts CAD data for each of parts of an assembly, disposed position data, as information for position aligning for each of the parts, and/or a modeling kind indicative of a connection kind of modeling on a connect-portion between the parts and connect-portion modeling data for presenting a modeling method indicative of a connection processing method for the modeling. Mesh data for the assembly may be obtained through position alignment of said analyzing mesh data, upon basis of said analyzing mesh data for a unit of each part of the assembly and said disposed position data stored in said CAD data. Analysis model data for the assembly may be obtained through modeling the connect-portion between said parts, by applying said connect-portion modeling data stored within said CAD data onto that assembly mesh data obtained.

Further, according to the present invention, for accomplishing the object mentioned above, there may also be provided an analysis model producing apparatus, for producing an analysis model with using CAD data, which is produced in a CAD, and analyzing mesh data, which is produced upon basis of that CAD data. The apparatus may comprise: means for storing said CAD data comprising parts CAD data for each of parts of an assembly and disposed position data, as information for position aligning for each of the parts, and/or a modeling kind indicative of a connection kind of modeling on a connect-portion between the parts and connect-portion modeling data for presenting a modeling method indicative of a connection processing method for the modeling; means for producing mesh data for the assembly through position alignment of said analyzing mesh data, upon basis of said analyzing mesh data for a unit of each part of the assembly and said disposed position data stored in said CAD data; and/or means for producing analysis model data for the assembly through modeling the connect-portion between said parts, by applying said connect-portion modeling data stored within said CAD data onto that assembly mesh data obtained.

Also, according to the present invention, in the analysis model producing apparatus as described in the above, preferably, said modeling kind on the connect-portion between the parts and said modeling method may be stored within a connect-portion modeling database. The modeling kind and the modeling method stored within said connect-portion database may be selected, appropriately, while designating a part to be a target of connect-portion modeling, thereby to be said connect-portion modeling data within said CAD data.

### BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:
Fig. 1 is a system block diagram for showing an analysis model producing apparatus, according to an embodiment of the present invention;
Figs. 2 through 10 are views for explaining each part within the analysis model producing apparatus; and wherein, in particular, Figs. 2, 4, 5 and 9 show an example of an operation screen, Fig. 3 explains the condition when aligning positions of analyzing mesh data, and Figs. 6 to 8 explain each of those data; and
Fig. 10 is a view for showing steps of the processing therein.

### DETAILED DESCRIPTION OF THE INVENTION

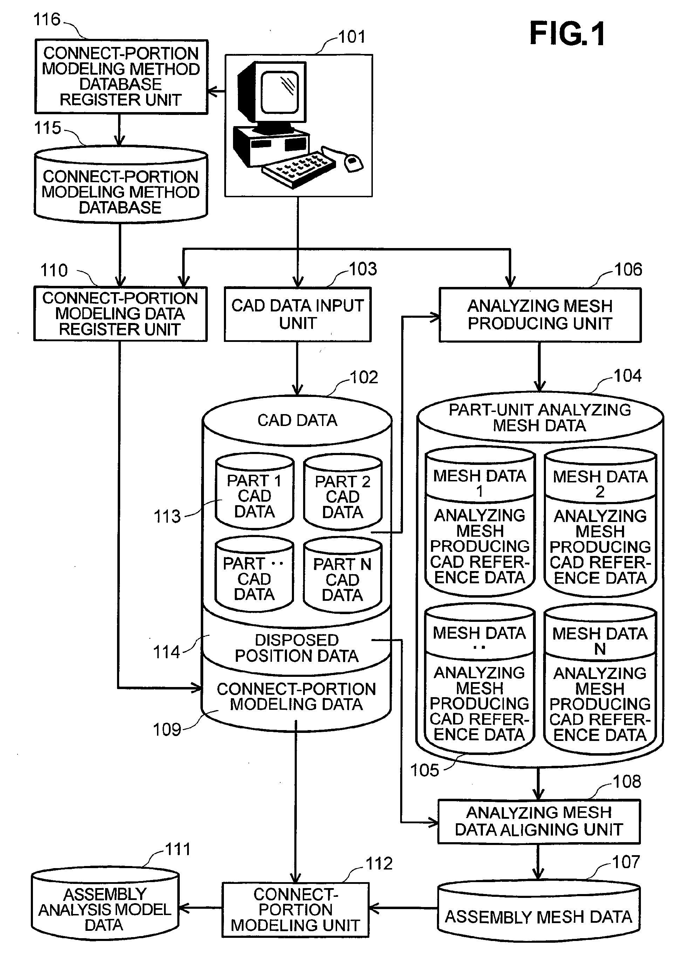

Hereinafter, embodiments according to the present invention will be fully explained by referring to the attached drawings. Fig. 1 is a system structure view for showing an embodiment of an analysis model producing apparatus, according to the present invention.

The analysis model producing apparatus shown in Fig. 1, according to the present embodiment, comprises an input/output device 101, an analyzing-mesh producing unit 106, and an analyzing mesh data position-alignment unit 108. The input/output device 101, being made up with, such as, a keyboard, a pointing device, a display and so on, it is used for a user to input data therein or to display data thereon. A CAD data input unit 103 inputs CAD data (i.e., configuration model data) of an assembly model, and registers them in the form of CAD data 102. The analyzing-mesh producing unit 106 produces an analyzing-mesh for each of the parts CAD data 113 contained within the CAD data 102, and registers it, as a part-unit analyzing mesh data 104 and also an analyzing-mesh producing CAD reference data 105. The analyzing mesh data position-aligning unit 108 obtains the position information of the CAD data 102 corresponding to each of the part-unit analyzing mesh data 104, while disposing the each part-unit analyzing mesh data 104 after aligning or fitting the position thereof , and thereby registers it as an assembly mesh data 107.

The analysis model producing apparatus further comprises a connect-portion modeling data registering unit 110, a connect-portion modeling unit 112, and a connect-portion modeling database register unit 116. The connect-portion modeling data register unit 110 designates a part to be connected, while picking up a modeling kind of the connection portion (connect-portion) of parts from a connect-portion modeling database 115, and thereby registers the part to be connected and the modeling kind thereof, as a connect-part modeling data 109 within the CAD data 102. Herein, the modeling kind is a distinction between complete fixing and simple contact, in the connect-portion, for example, though the details of which will be mentioned later. The connect-portion modeling portion 112 obtains a modeling method corresponding to the connect-portion modeling data 109 from the connect-portion modeling database 115, while modeling the connect-portion of the parts to be connected from the assembly mesh data 107, upon the basis of this modeling method, and thereby registering it as an assembly analysis model data 111. Herein, the modeling method means a processing method to be treated for connection in that connect-portion; i.e., conducting a connection process so that elemental joints on the analyzing meshes are coincident with each other between the connection parts A and B, or conducting a bond connection. The connect-portion modeling database register unit 116 registers the connect-portion modeling kind and the modeling method into the connect-portion modeling portion 112, as well as, the connect-portion modeling database 115.

Next, explanation will be made in details, about an example of the steps of processing, which is conducted within the analysis model producing apparatus shown in Fig. 1 mentioned above.

### "Step for inputting CAD data"

The CAD data 113 is produced for a unit of parts, and position alignment or fitting is conducted upon each of those CAD data 113 by a unit of part (hereinafter, "part-unit CAD data") and then they are registered in the form of the CAD data 102. Thus, within this CAD data 102 are registered the part-unit CAD data 113 and the disposed position data 114 for each part.

### "Step for producing Analyzing Mesh in a unit of parts"

For the part-unit CAD data 113, the analyzing mesh is produced for each unit of parts, and is registered, as the analyzing mesh data 104 for each part. In that instance, a reference data between the part-unit CAD data 113, as being the producer thereof, is registered together with the mesh data, as the analyzing mesh producing CAD reference data 105. Herein, the reference data is that, being indicative of a relationship of a pair between the part-unit analyzing mesh data and the part-unit CAD data 113, or it may be a part CAD file name in the place thereof. In general, the part-unit analyzing mesh data 104 is produced, such as, in a designing department in charge thereof or a maker of the part, and each of those is produced for the purpose of the numerical analysis by a unit of part.

### "Step for Aligning Position of Analyzing Mesh Data by a unit of part"

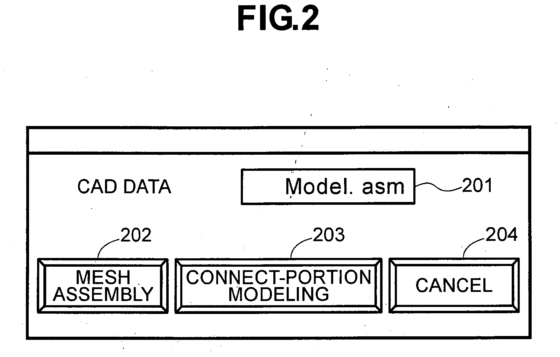

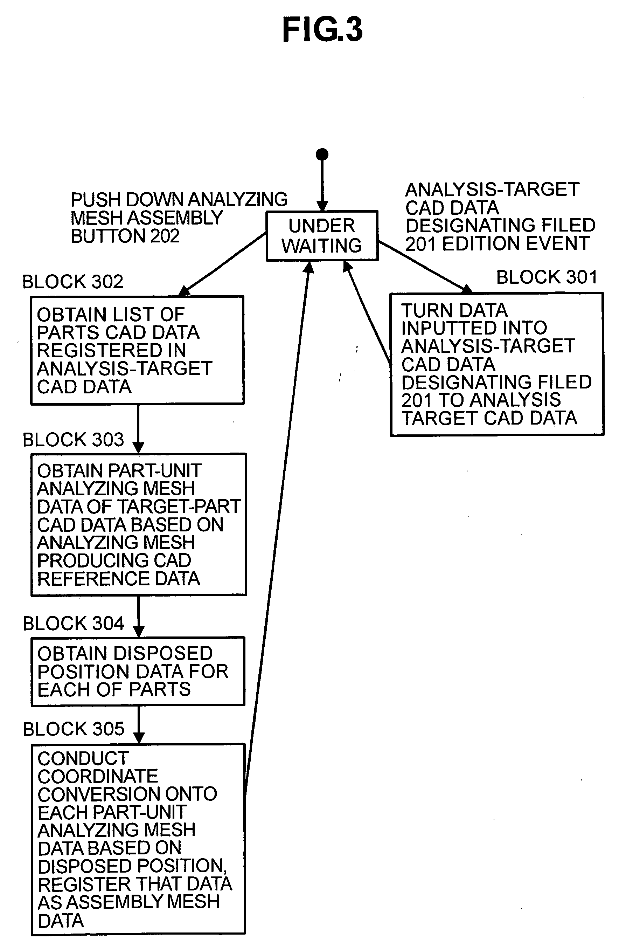

An example of steps, for aligning or fitting the position on the analyzing mesh data for each unit of part, will be explained by referring to an example of an operation screen shown in Fig. 2, as well as, a conditional transition view shown in Fig. 3, when aligning or fitting the position thereof. This Fig. 2 is a view of the operation screen, in relation to the analyzing mesh assembly and the connect-portion modeling, and Fig. 3 is the conditional transition view when aligning the positions of the analyzing mesh data.

In Fig. 2, within an analysis-target CAD data designation filed 201 on the operation screen is designated the assembly model, such as, the CAD data of analysis target (see BLOCK 301 shown in Fig. 3). When an analyzing mesh assembly button 202 is pushed down, then a list of the part CAD data 113 is obtained, which are registered within the target CAD data (BLOCK 302). For each of the part CAD data, the part-unit analyzing mesh data 104 of the target CAD data is obtained upon the basis of the analyzing mesh producing CAD reference data 105 (BLOCK 303). Further, the disposed position data on the assembly data is obtained from the disposed position data 114 (BLOCK 304). Each of the part-unit analyzing mesh data 104 is converted in the coordinates thereof, upon the basis of the disposed position data 114 targeted, so as to be registered to be the assembly mesh data 107 (BLOCK 305). An operation image of those will be mentioned, later.

### "Step for registering Modeling Information about the Connect-portion"

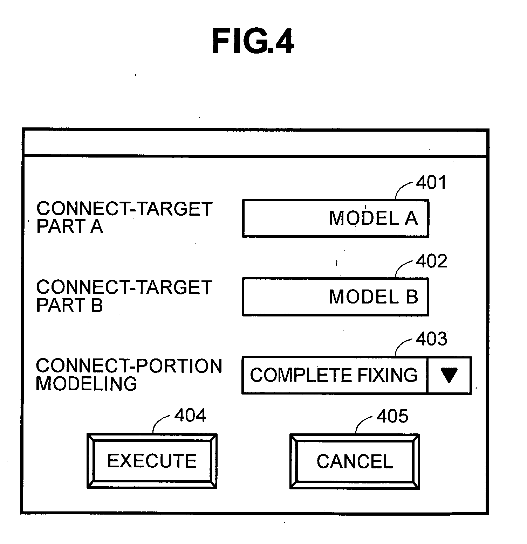

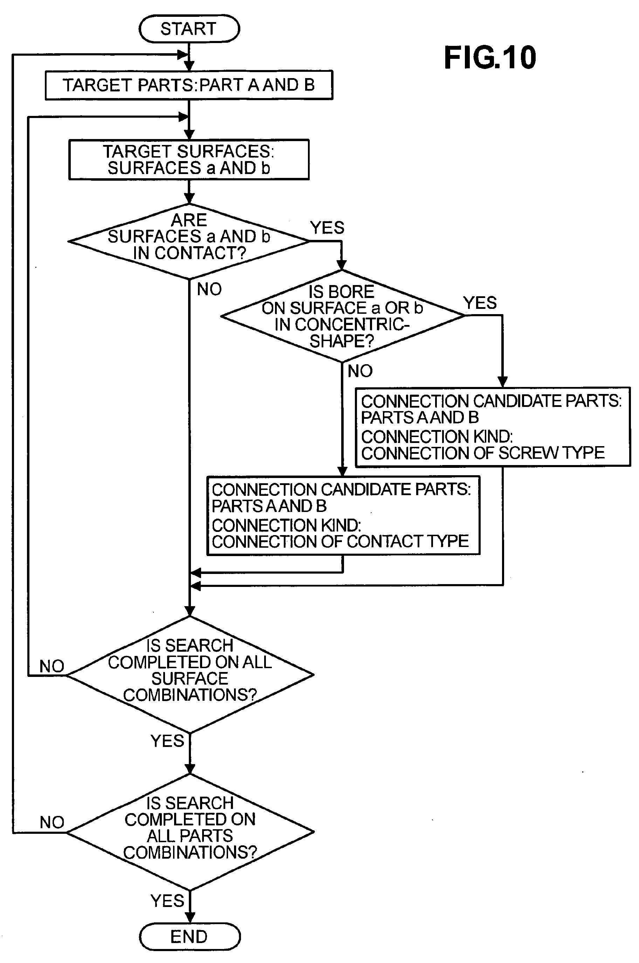

An example of steps, for registering the modeling information of the connect-portion, will be explained by referring to the operation screen shown in Fig. 4, as well as, the processing steps for the connect-portion shown in Fig. 10. This Fig. 4 shows the operation screen for registering, in particular, relating to the modeling information of the connection portion.

Candidates are picked up from the connect-portions. In this instance, recognition is made also upon the modeling kind of the connect-portion, at the same time. With the present embodiment, as the modeling kind for the connect-portion, there are treated two (2) kinds thereof, such as, a contact-type connection and a screw-type connection, for example. Thus, the contact-type connection means a connection obtained through a method, such as, welding, deposition, caulking, etc. The screw-type connection means a connection obtained through a method of using a bolt or a rivet therein.

Fig. 10 shows the processing steps, in particular, for discriminating the candidates for the connection, and also the modeling kinds for the connect-portion. First, two (2) sets of parts A and B are taken out from all the parts. For the parts A and B taken out, search is made if a pair of surfaces (a,b) are coincident with in the position thereof, or in contact with, upon all of the surfaces building up the CAD data. Next, search is made if there is included a concentric shaft hole or bore (i.e., a cylindrical surface) or not, upon targeting that pair of the surfaces (a,b). If there are included the concentric shaft holes or bores, the pair of surfaces (a,b) having the hole or bore configuration therein are picked up to be the candidate for the screw-type connection. If there is not included such the concentric shaft hole or bore, then the pair of surfaces being coincident with are picked up to be the candidate for the contact-type connection. With this processing, discrimination can be made on the candidates for the connect-portion and also on the modeling kinds for the connect-portion, as well.

Then, the operation screen shown in Fig. 4 is displayed, so as to make designation of two (2) sets of the parts to be modeled, as being the connect-portions, into connect-portion designation fields 401 and 402, selecting from the candidates searched out in the above. However, though the search is conducted only upon the portion, being in contact with the configuration thereof, as the candidates for the connect-portions,in the present embodiment, but in actual, there may be cases where the portions are moved or modified in the shape thereof, so that they are in contact with each other, within the steps on the way of the numerical analysis. Therefore, for dealing with such the cases, the parts can be selected, arbitrarily, so as to form a pair therewith.

Into a connect-portion modeling designating field 403 is designated the modeling kind. The connect-portion modeling kinds, which can be designated therein, are restricted to the data, being coincident with the modeling kind of the connect-portion between the two (2) selected connecting portions, among the data registered within the connect-portion modeling database 115. Lastly, when an execution button 404 is pushed down, the connect-target parts 401 and 402 and the modeling kinds 403 are registered, as to be connect-portion modeling data 109.

### "Step for Modeling the Connect-Portion of Assembly Mesh Data"

Explanation will be given about the steps for modeling the connect-portion of the assembly mesh data, by referring to the operation screen shown in Fig. 2. When a connect-portion modeling button 203 is pushed down, a list is obtained about the connect-portion modeling data 109 which are registered within the target CAD data. For the connect-portion for each of the connect-target parts, the modeling method is obtained from the connect-portionmodeling database 115, corresponding to the target modeling kind thereof. The target modeling method is executed for each of the connect-target part, thereby modeling the connect-portion. The connect-portion, which is modeled in the above, is registered into the assembly analyzing model data 111.

### "Step for registering Modeling Method into Connect-Portion Modeling Database"

The modeling method is installed in the form, such as, a program source-code file, a DLL (Dynamic Link Library) format, or an execution module file format, etc., for example.

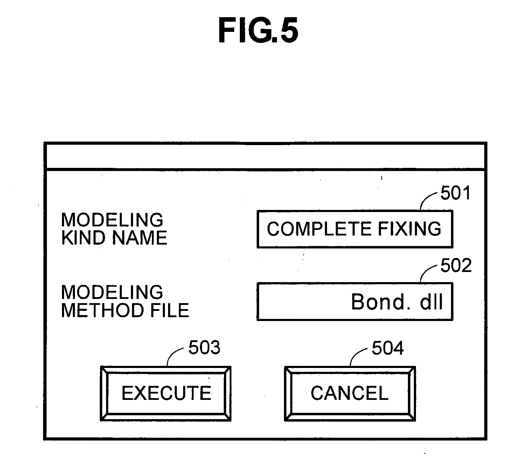

By referring to the operation screen shown in Fig. 5, explanation will be made about steps for registering the modeling method into a connect-portion modeling database. Into a modeling method designating field 502 is designated a file installing the modeling method therein. When designating an execution button 503, the modeling method is registered into the connect-portion modeling database 115.

Hereinafter, a method for producing the analysis model will be mentioned in the details thereof, by referring to the analysis model producing apparatus shown in Fig. 1. Herein, it is assumed that the CAD data and the connect-portion modeling database are already registered, as will be mentioned below. However, in the actual apparatus, the modeling method is installed in the form of a program.

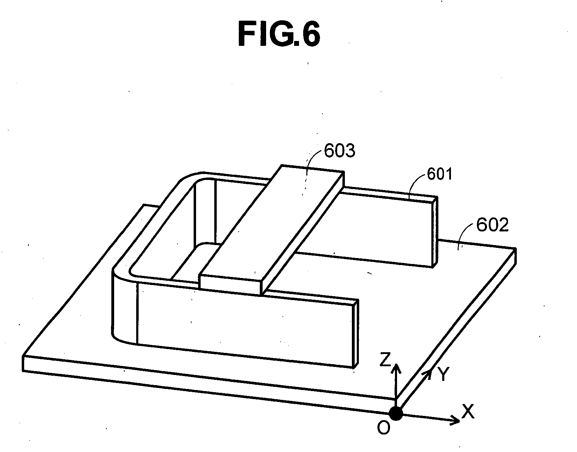

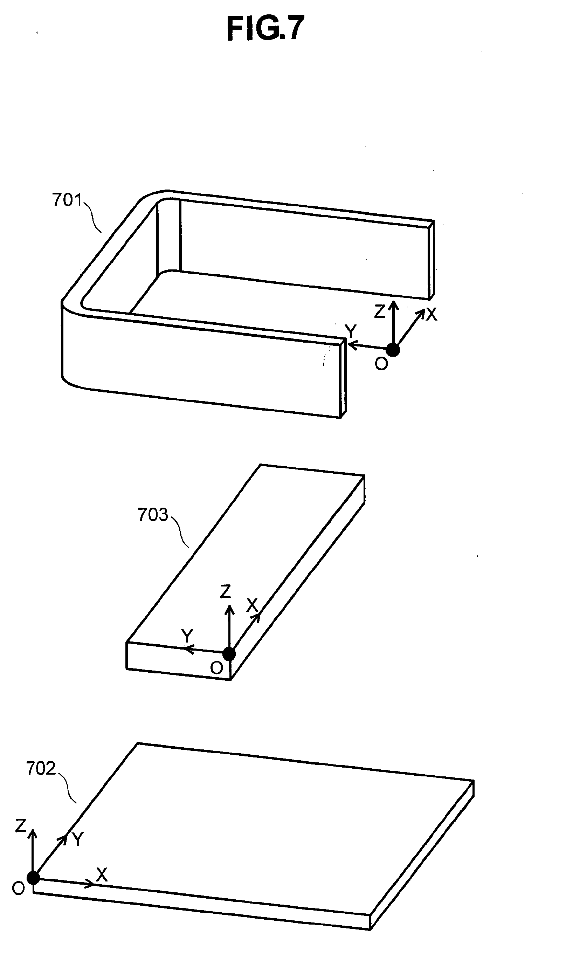

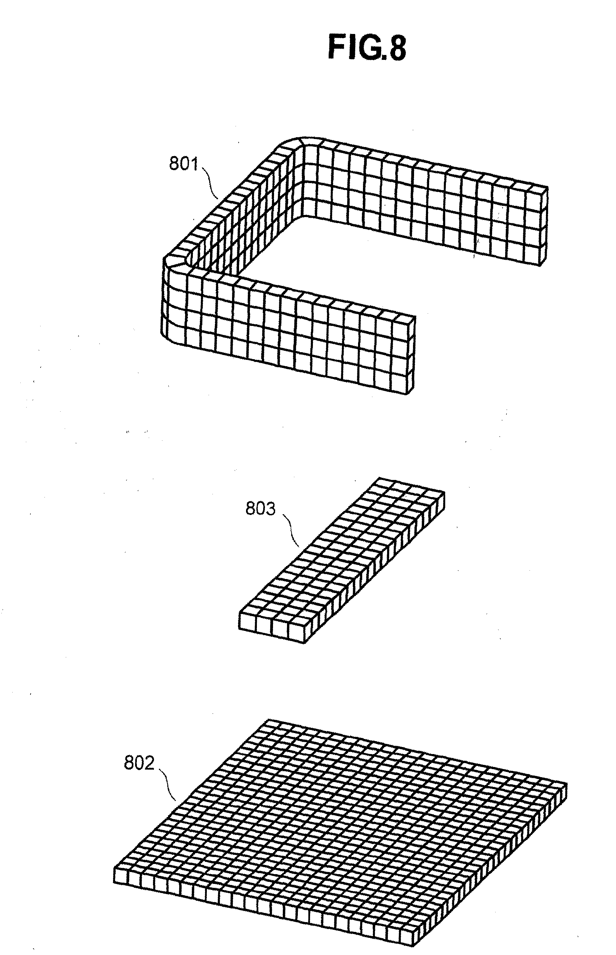

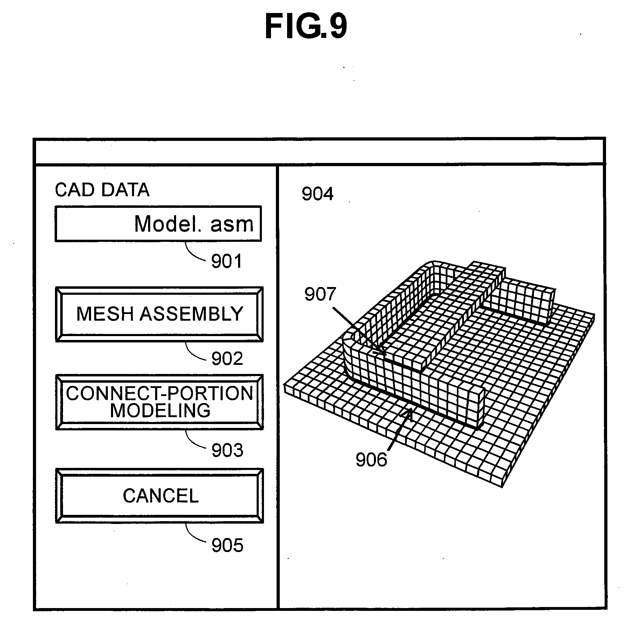

Figs. 6 through 9 show the manners of producing the mesh data from the CAD model. Fig. 6 is a view for showing the CAD data about an assembly, which has parts 601 to 603. Fig. 7 shows the CAD data of those parts 601 to 603. Fig. 8 is a view for showing the analyzing mesh data for each of those parts 601 to 603. And, Fig. 9 shows a screen, displaying a display field of an assembly analysis model thereon.

The assembly CAD data has, as shown in Fig. 6, three (3) pieces of parts CAD data 601 to 603. The parts CAD data 601 is displayed as the CAD data 701 in Fig. 7. In the similar manner to that, the parts CAD data 602 is displayed as the CAD data 702, and also the parts CAD data 603 as the CAD data 703. The connect-portion modeling kind between the part 601 and the part 602 is the "complete fixing", while the connect-portion modeling kind between the part 601 and the part 603 is the "simple contact".

Into the connect-portion modeling database are already registered two (2) pieces of databases A and B, which will be described hereinafter. The database A has the modeling kind A and the modeling method A. The modeling kind A is the "simple contact" , and the modeling method A produces a contacting boundary element on the connecting portions. Namely, on the part analyzing mesh being in contact with a thick line 907 shown in Fig. 9 is produced a square or rectangular element, which has an attribute of "contacting boundary". The database B has a modeling kind B and a modeling method B. The modeling kind B is the "complete fixing", and within the modeling method is defined the condition of the "bond connection" for the connecting parts. Namely, the connect-portion of the part analyzing mesh corresponding to the thick line 906 shown in Fig. 9 is the "bond connection".

### "Step 1 for producing Analyzing Mesh by a unit of part"

The analyzing meshes are produced for the parts CAD data 701 to 703. Then, the part-unit analyzing mesh data 801 to 803 are also produced.

### "Step 2 for Aligning Positions on Analyzing Data by a unit of part"

On the operation screen shown in Fig. 9, the assembly CAD data is designated into an analysis-target CAD data designation filed 901. When an analyzing mesh assembly button 902 is pushed down, then the assembly analyzing mesh data is displayed within an analysis model display field 904. The assembly analyzing mesh data are produced through coordinate conversion or transformation of the part-unit analyzing mesh data 801 to 803 upon the basis of the disposed position data of the CAD data. However, the coordinate conversion herein is the conversion of the origin "O" of coordinates of each of the parts 701 to 703 shown in Fig. 7 mentioned above.

### "Step 3 for modeling the Connect-Portion on Assembly Mesh Data"

On the operation screen shown in Fig. 9, a connect-part modeling button 903 is pushed down. With this, the connect-portion between the part 601 and the part 602 is turned into the "complete fixing", while the connect-portion between the part 601 and the part 603 into the "simple contact" , thereby completing the modeling thereof. The method of modeling is already registered into the connect-part modeling database, in advance, and therefore the method registered therein is executed.

Through execution of the modeling, the connect-portion 906 between the part 601 and the part 602 is turned into the "complete fixing", and then the condition of the "bond connection" is set up for the target portion. While, the connect-portion 907 between the part 601 and the part 603 is turned into the "simple contact" , and then the contacting boundary element is produced thereon. The result of this is displayed within the analysis model display field 904.

As was mentioned in the above, the CAD data has the CAD data for each part, the disposed position data, as being the coordinate conversion data of each part, and the connect-portion modeling data. Herein, the coordinate conversion means the position aligning or fitting. Also, the disposed position data are the data, which are inputted from the CAD data input portion. As is shown in Fig. 7, since each of the parts differs in the origin of coordinates, then the coordinate conversion is executed upon the parts, for the purpose of converting them into the assembly CAD data shown in Fig. 6. Into the connect-portion modeling data are stored the modeling kinds and the modeling methods, which are obtained from the connect-portion modeling DB through the selection thereof, as well as, the data indicative of the parts as the target of connections. According to the present invention, it is characterized that the connect-portion modeling data is provided in the form of the CAD data.

Upon basis of the parts CAD data, the part-unit analyzing mesh data shown in Fig. 8 is produced. From the part-unit analyzing mesh data produced and the disposed position data, as being the position data of the CAD data, the assembly mesh data is produced through conducting the position alignment upon the parts analyzing mesh data. The assembly mesh data is produced when the mesh assembly button shown in Fig. 9 is pushed down. It is also a feature of the present invention that the assembly mesh data is produced with using the position information of that CAD data. With this, for example, when changing the position of the part 603, the assembly mesh data can be obtained, easily, where the position thereof is changed, but only through an inputting operation of the disposed position data.

Further, when applying the modeling kind and the modeling method, which are stored within the CAD data, the modeling is executed upon the connect-portion of the parts, thereby producing the assembly analysis model. This assembly analysis model is produced when pushing down the connect-part modeling button 903 shown in Fig. 9. Thus, it is also other feature of the present invention to apply the connect-portion modeling data, which are stored to be the CAD data, onto the assembly mesh data. With this, even if changing the design on a certain part, it is possible to change the modeling information about other parts relating to that part, following therewith, thereby reducing the operation for producing the analysis model for an assembly model.

According to the present invention, it is possible to produce the analyzing mesh for the assembly model with using the analyzing mesh for each unit of parts. Also, the modeling information about the connect-portion between the parts can be registered into the CAD data; therefore, the modeling information can follow the changes of the disposed positions on the CAD system. Accordingly, it is possible to reduce the operation for producing the analysis model for the assembly model, greatly.

The present invention may be embodied in other specific forms without departing from the spirit or essential feature or characteristics thereof. The present embodiment(s) is/are therefore to be considered in all respects as illustrative and not restrictive, the scope of the invention being indicated by the appended claims rather than by the forgoing description and range of equivalency of the claims are therefore to be embraces therein.

## Claims

1. An analysis model producing apparatus, for producing assembly analyzing model data (111) about an assembly having plural numbers of parts (601-603) thereof, comprising:
a CAD database (102), which stores CAD data (113) for each of the plural numbers of parts (601-603), wherein
said CAD database (102) comprises connect-portion modeling data (109) of modeling and normalizing a connecting condition between those parts (601-603).

2. The analysis model producing apparatus, as described in the claim 1, wherein said connect-portion modeling data (109) comprises data indicative of a modeling kind and a modeling method, as well as, a target part of connection.

3. The analysis model producing apparatus, as described in the claim 2, wherein saidmodeling kinds includes a simple contact and a complete fixing, and saidmodeling method includes production of a contact boundary element and a definition of bonding connection.

4. The analysis model producing apparatus, as described in at least one of claims 1 to 3, wherein said CAD database (102) comprises disposition position data (114) for each of the parts (601-603), and is further provided a means (108) for producing assembly mesh data (107) upon basis of said disposition position data (114).

5. The analysis model producing apparatus, as described in the claim 4, wherein said assembly mesh data producing means (108) makes alignment upon the analyzing mesh data (104) for each of the parts (601-603), upon basis of the analyzing mesh data and the disposition position data (114), which are produced for each of the parts (601-603), thereby producing the assembly mesh data (107).

6. The analysis model producing apparatus, as described in the claim 4 or 5, further comprising a connect-portion modeling means (112) for determining a connect-portion model fitting to an actual connect-portion, which said assembly mesh data (107) has, by using said connect-portion modeling data (109).

7. An analysis model producing apparatus, for producing an analysis model with using CAD data (102), which is produced in a CAD, and analyzing mesh data (104), which is produced upon basis of that CAD data (102), comprising:
means (103) for storing said CAD data (102) comprising parts CAD data (113) for each of the parts (601-603) of an assembly and disposed position data (114), as information for aligning for each of the parts (601-603); and
means (108) for producing mesh data (107) for the assembly through alignment of said analyzing mesh data (104), upon basis of said analyzing mesh data (105) for a unit of each part (601-603) of the assembly and said disposed position data (114) stored in said CAD data (102).

8. An analysis model producing apparatus, for producing an analysis model with using CAD data (102), which is produced in a CAD, and analyzing mesh data (104), which is produced upon basis of that CAD data (102), comprising:
means (103, 110) for storing said CAD data (102) comprising parts CAD data (113) for each of the parts (601-603) of an assembly and disposed position data (114), as information for aligning for each of the parts (601-603), and in addition thereto, a modeling kind indicative of a connection kind of modeling on a connect-portion between the parts (601-603) and connect-portion modeling data (109) for presenting a modeling method indicative of a connection processing method for the modeling;
means (108) for producing mesh data (107) for the assembly through alignment of said analyzing mesh data (104), upon basis of said analyzing mesh data (105) for a unit of each part (601-603) of the assembly and said disposed position data (114) stored in said CAD data (102); and
means (112) for producing analysis model data (111) for the assembly through modeling the connect-portion between said parts (601-603), by applying said connect-portion modeling data (109) stored within said CAD data (102) onto that assembly mesh data (107) obtained.

9. The analysis model producing apparatus, as described in the claim 8, wherein said modeling kind on the connect-portion between the parts (601-603) and said modeling method are stored within a connect-portion modeling database (109), and the modeling kind and the modeling method stored within said connect-portion database (109) are selected, appropriately, while designating a part (601-603) tobe a target for connect-portion modeling, thereby to be said connect-portion modeling data (109) within said CAD data (102).
